# EUROPEAN PATENT SPECIFICATION

(11) **EP 0 531 633 B1**
(45) Date of publication and mention of the grant of the patent: **21.01.1998**
(21) Application number: 92110417.0
(22) Date of filing: 19.06.1992
(51) Int. Cl.: A21C 11/10, A21C 15/02, B26D 7/01, B26D 7/06

(54) **A device for trimming too long sticks and for eliminating those too short**
Vorrichtung zur Egalisierung von zu langen Stöcken und zum Zurückweisen von zu kurzen Stöcken
Appareil pour couper des bâtons trop longs et pour rejeter des bâtons trop courts

(30) Priority: 13.09.1991 JP 262848/91
(43) Date of publication of application: 17.03.1993
(73) Proprietor: EZAKI GLICO KABUSHIKI-KAISHA, Nishiyodogawa-Ku, Osaka (JP)
(72) Inventor: Kanegae, Yoshifumi, Nishiyodogawa-Ku, Osaka (JP)
(74) Representative: Ruschke, Olaf, Dipl.-Ing.

(56) References cited:
- DE-A- 1 028 505
- US-A- 2 450 583
- US-A- 2 749 955
- US-A- 3 631 908
- US-A- 4 179 865

## Description

The present invention relates to a device for conveying thin and relatively fragile sticks non-uniform in length one after another for trimming short those sticks too long and for eliminating those sticks too short, so that sticks substantially uniform in length are conveyed to the next step.

Similar devices for selecting and feeding those in a given range of length from a multiplicity of sticks or the like non-uniform in length are supposed to be known in the field of manufacture of precision parts. US-A 4 179 865 discloses for example a device for conveying lasagne noodles from the stripper of a high production pasta oven in such a manner that the noodles may be continuously processed through a packaging line without interruption. This device comprises sizing saws to saw generally U-shaped configurated noodle blanks to length and direct the noodles for continued processing within the line. The noodle blanks are drawn by conveyor belts comprising teeth formed perpendicular to belt advancing direction over a mechanism used to center the noodle blanks into the saw station.

The centering mechanism comprises vertically disposed loop belts defining a converging mouth with the open end of the mouth having a width appreciably greater than the length of the noodle blanks and the narrowed down inner end of the mouth having a width only slightly greater than the width of the noodle blanks. In operation the ends of noodle blanks centered by the centering mechanism and drawn into the saw station by the toothed conveyor belts are cut off by the end saws, thus removing the loops connecting the opposite sides of the blanks, forming two noodles of uniform length from each blank.

Too short noodle blanks will pass always the end cut saws without the ends of the noodle blanks being cut off. An increased waste is produced by this device due to the cut off loops of the noodle blanks.

The sticks to be trimmed and/or eliminated according to the present invention are something like biscuits somewhat different in shape, brittle and incidentally cheap. As to the length of such sticks, too high precision is not required. Adoption of some of the known like devices as mentioned above, therefore, means increase in manufacturing cost and decrease in productivity.

Hence, there has been a strong desire for development of a device suited for the physical properties of such as biscuits which are trimmed or eliminated at a high specific rate, being low in hardware cost as well as running cost.

The device for conveying thin and relatively fragile sticks non-uniform in length one after another for trimming short those sticks too long and for eliminating those sticks too short according to the invention comprises an endless belt or the like having therein a multiplicity of grooves being capable of accommodating the sticks and formed as recesses perpendicular to the belt's advancing direction, a first guide parallel to the belt and having a first introducer, said sticks being fed upstream of the introducer with respect to the conveying direction, a limiter and an opposed second guide at a position opposite to the first guide, a deterrent plate disposed near the topside and downstream end of said first guide, a horizontal air blow provided near the downstream end of the first guide and a pressing member downstream of said horizontal air blow and at a position opposed thereto, such that there remain in the grooves only sticks shorter than the distance between a main plate of the first guide and the limiter and longer than the distance between the opposed second guide and the deterrent plate, when the device is used.

The material of sticks trimmed or eliminated according to the operation of the device of the present invention is high in brittleness, easily broken when subjected to an external force such as biscuit, pretzel, cracker, rice cake or the like. As to its shape, there is no limitation if it is thin and sticklike but preferred is 50 - 200 mm in length and 2 - 10 mm in thickness. There is no particular limitation with regard to the sectional shape of such sticks.

Belt or the like referred to in the present invention may, for instance, be a loop of belt used in a belt conveyor, or a loop of chain in an chain conveyor with or without part/s attached thereto.

In case of a belt conveyor grooves are formed in the belt itself and in case of a chain conveyor it is formed by the use of parts having grooves or made up of parts forming grooves when they are attached or assembled.

A multiplicity of grooves are provided equidistant and perpendicular to the advancing direction of the belt or the like.

The grooves are to be dimensioned so that they well match the dimensions of the sticks to well accomodate them and allow them to displace to some extent within the individual grooves.

Each groove is required to be shorter than the stick to be accommodated so that either or both end/s of the stick project/s ensuring against placing nothing other than the accommodated stick above or below or beyond either end of the groove.

The first guide is parallel to the belt or the like, having an introducer and main plate bonded or integrated together, the rear end or the end nearer to the belt or the like of the main plate of the guide being set parallel to the belt or the like. The introducer is a plate set to approach the belt or the like slantwise so that the sticks can be aligned along the center line of the belt or the like. The portions of the first guide near the outlet portions (nozzles) of a horizontal air blow provided at a rear end outside of the guide are to be notched all over or where corresponding to its air passages.

The limiter is to be set to face the first guide with the belt and the like in between. The distance between the first guide and the limiter is to be made substantially equal to the desired length of the stick so that anything longer than that is arrested thereby. There is no limitation about the shape and dimensions of the limiter and as its examples may be cited objects sticklike, edge-like, plate-like or the like. The limiter is to be positioned at the same phase as the guide or a little behind it.

With respect to the device of the invention the state of being opposed to each other with a belt or the like in between is to be called simply as being opposed to each other. The position in a reverse direction of advance along the advancing direction of the belt or the like is to be called upstream with respect to the conveying direction, while the position in a direction of advance is to be called downstream with respect to the conveying direction.

The opposed second guide is to be positioned at an opposed position to the first guide with a belt or the like in between and at the same phase or a little behind that. Its shape may be, but not necessarily be, symmetrical to that of the first guide and may, for example, be a plate fixed parallel to the belt or the like at a given distance therefrom.

The distance between the first guide and the opposed second guide is made a little more than the given dimension of the stick so that anything larger than that cannot pass through them.

A second introducer can be provided in contact with the limiter and the second guide being upstream of the limiter with respect to the conveying direction.

A second introducer can be provided apart from the limiter and a guide plate of the second guide and upstream of the limiter with respect to the conveying direction.

Upstream of the limiter in the conveying direction or the opposed second guides there is provided a guide plate as necessary. The guide plate, which has the same function as the introducer and is for truing up the arriving sticks markedly off the groove along the central zone of the belt and the like, can have its structure similar to that of the introducer, and this may be set off or in contact with or monobloc with the limiter or the opposed guide.

In a region from where the opposed guides are fixed until where the pressing member is disposed there is provided a plate fixed parallel to the belt or the like in a manner to cover one end of the stick from above with a small distance therebetween and this is called the deterrent plate.

A horizontal air blow is so arranged that the air gushing out there hits horizontally the end portion directly or through the notches provided in the rear half section of the main plate, allowing the other end of the stick to slide into contact with the opposed guide.

The pressing member is provided further in the belt's advancing direction downstream of the horizontal air blow and above the opposed guides and the groove so that one end of the stick can be pressed downward. The pressing force is required to be of such a degree that one end thereof can be pressed down without risk of being broken with the fragility of the stick taken into consideration. For this reason used as the pressing member is a flexible spatula, a plate supported by a spring or an air blow (blowing in the vertical direction too short sticks). A brush or a piece of sponge may also be used as pressing member, and it may as well be kept revolving.

First, the sticks are fed into the grooves formed in the belt or the like by the use of a normally used feeder. In this case it is convenient to have the sticks fed toward the side of the grooves nearer to the guide. Or, there is feasible an alternative, in which the sticks having been fed randomly in the grooves are moved toward the guide by means of the guide plate positioned on the side opposed to the guide before the fed sticks are led to the introducer.

The sticks moving on a conveyor come into contact with the introducer and move toward the opposed guide gradually in the grooves according to the inclination thereof.

The sticks longer than the given limit are caused to hit against the limiter, are subjected to the lateral pressure both at the end of the groove and the limiter and the end portion of the stick is mostly snapped off in the vicinity of the end of groove, resulting in a smaller dimension. When the top end of the limiter is formed as an edge, it is of course possible that cutting is effected thereby. Anyway, the sticks made shorter thereby continue moving forward and the snapped chips are recovered below.

Since the sticks having moved forward for a while are caused to slide into the grooves by the air gushing out of the horizontal air blow until they are caused to hit against the opposed guide, this means that the sticks have one end thereof arranged on the opposed guide side. As a result, the other ends thereof are caused not to project within the region of the deterrent plate if the dimension should be less than the set limit.

Since the sticks are conveyed to where the pressing member is present under such conditions and the portion of the sticks near the opposed guide are strongly pressed down, those whose lengths are within the set limits are prevented from coming off the grooves and jumping up by deterrent plate, while those whose lengths are less than the set limit jump up and fall down.

It is, however, possible to refill the vacant grooves by some of the known methods. For instance, there is a known feeder with which vacant grooves can be detected by means of photoelectric tube to be refilled individually.

These and other objects and features for the present invention will become apparent from the following description taken in conjunction with the preferred embodiment thereof with reference to the accompanying drawings, in which:
- Fig. 1: is a principal plan view of an embodiment of the present invention.
- Fig. 2: is a principal front view of an embodiment of the present invention.
- Fig. 3: is a principal sectional view of an embodiment of the present invention.
- Fig. 4: is a principal side view of an alternative embodiment of the present invention.
- Fig. 5: is a principal plan view of a second alternative embodiment of the present invention.
- Fig. 6: is a principal side view of a third alternative embodiment of the present invention.

### EMBODIMENT 1:

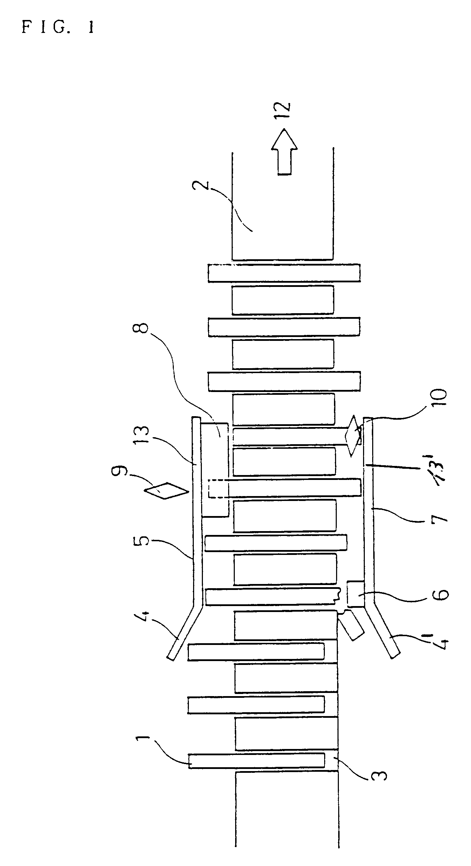

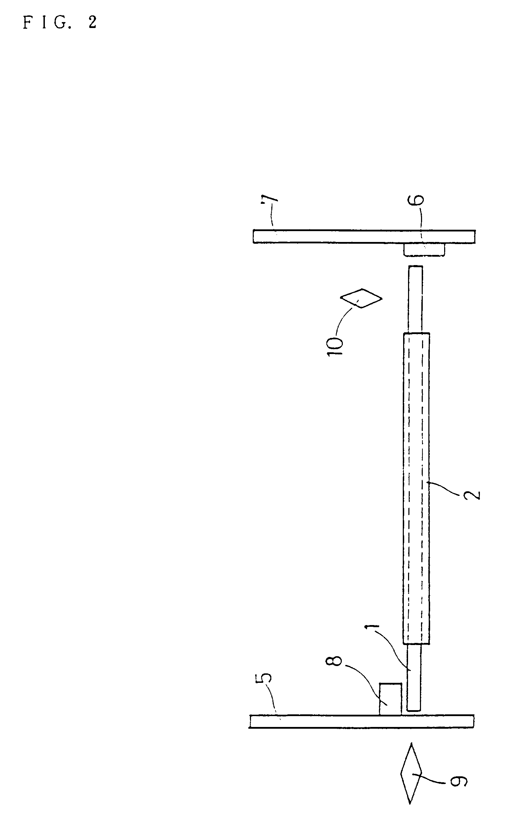

This embodiment will be described below in detail with reference to Figs. 1, 2 and 3.

A stick 1 is a pretzel about 120 mm in length, about 4,5 mm in thickness and about 1,2 g in weight.

A conveyor 21 comprises two rolls 14, 14' and one endless belt 2.

The endless belt 2 tightly put on two rolls 14, 14', has one thereof 14 driven positively. The section 11 of the belt 2 moving downstream with respect to the conveying direction accommodating the sticks in grooves 3 formed therein is level. The endless belt 2 is 100 mm wide and about 1 m long, and is made of hard rubber.

Grooves 3 are provided equidistantly and perpendicularly to the advancing direction of the belt 2. Sectional view of the groove is of a square, being 5 mm in width, 5 mm in depth and 20 mm in distance.

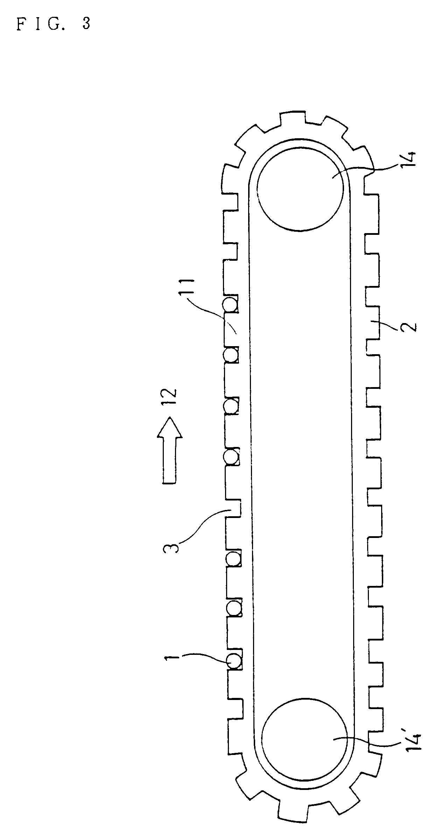

The endless belt shown in Fig. 3 is driven clockwise at a speed of about 100 mm/second.

A first guide 5 is disposed on one side of the section 11 of the endless belt 2 and is made up of a first introducer 4 and a main plate, the latter downstream of the former with respect to the conveying direction of the belt 2 and formed to be monobloc. At the other side of the belt's section 11 a second introducer 4' is in contact with the limiter 6 and an opposed second guide 7 which are arranged also to be monobloc, with the second introducer 4' being upstream to the limiter 6 with respect to the conveying direction. The opposed second guide 7 is parallel with the belt 2.

The introducer 4 respectively 4' is a flat plate gradually approaching the belts section 11 in its conveying direction. It is in contact with the guide's main plate 13 respectively 13'. The angle between the two plates is approximately 120 degrees. The guide's main plate 13 respectively 13' is in parallel with the belt's advancing direction. The distance between the belt's section 11 moving downstream with respect to the conveying direction and the first guide 5 or the opposed second guide 7 is 20 mm respectively. And the lengths of the first guide 5 and the opposed second guide 7 are 200 mm respectively, and these are both made of stainless steel.

The limiter 6 is a flat plate in contact with the front edge of the opposed second guide 7 and extended close to the edge of the belt's section 11 moving downstream with respect to the conveying direction. The limiter is 15 mm in length and is made of stainless steel.

A deterrent plate 8, too, is a flat plate disposed above the belt's section 11 and in contact with the topside of the main plate 13. The length of the deterrent plate is 25 mm and the distance from its underside to the belt's section 11 is 10 mm. The material of this plate is stainless steel.

A horizontal air blow 9 is disposed about the center of the main plate 13 and the air gushing out there is perpendicular to the belt's advancing direction 12.

In order to let air gushing out through the horizontal air blow 9 be introduced to the position of belt there are provided holes (not shown) in the corresponding parts of the guide 5. The intensity of the air current is approximately 1 kg/cm².

A vertical air blow 10 is disposed in the vicinity of the rear end of the opposed guide 7 above and between the opposite guide 7 and the edge of the belt's forward-moving section 11. The intensity of this air current which blows downwardly, too, is approximately 1 kg/cm².

When the device described above is used, there remain in the grooves only sticks shorter than the distance between the main plate 13 and the limiter 6 and longer than the distance between the opposed guide 7 and the deterrent plate 8.

### EMBODIMENT 2:

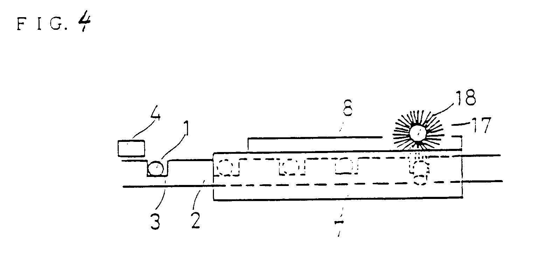

As shown in Fig. 4 there is provided a rotary brush 17 as the pressing member.

### EMBODIMENT 3:

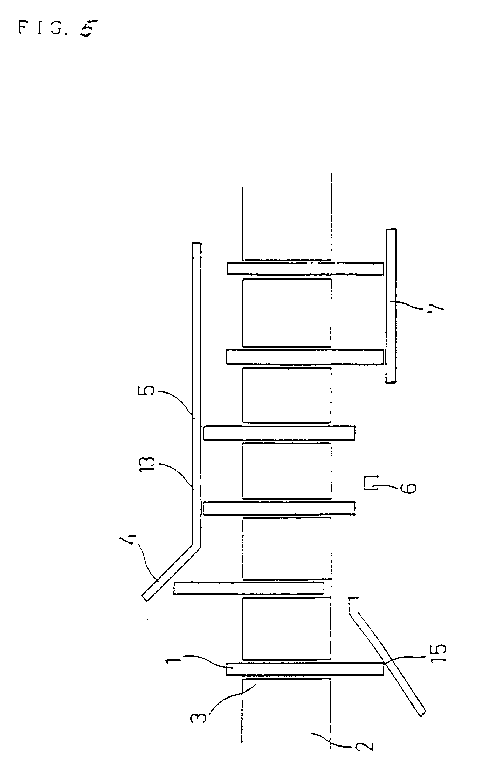

As shown in Fig. 5 there are arranged a guide plate 15, limiter 6 and opposed second guide 7 separately.

### EMBODIMENT 4:

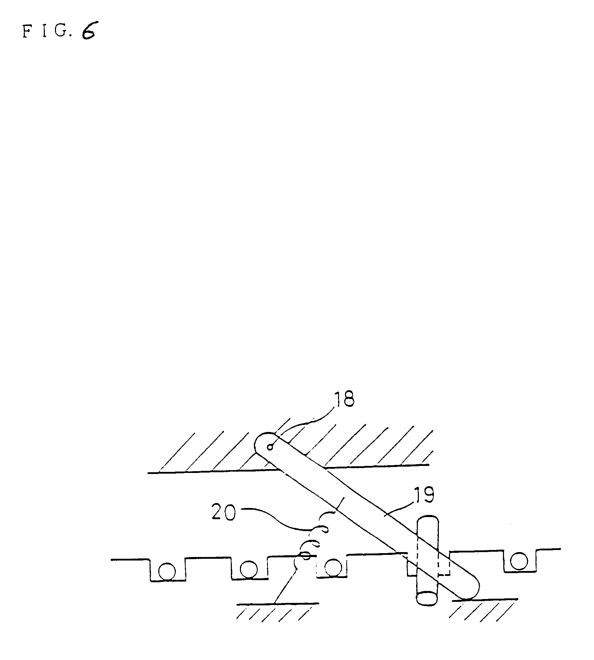

As shown in Fig. 6, it is so arranged that the stick is pressed out of the groove by the use of the pressing member with elastic and repulsive force imparted by means of a spring 20.

Sticks too long are trimmed to the predetermined length, hence the loss in quantity of the sticks can be minimized. The selecting mechanism of the device is simple and can well withstand the high speed operation, and the device can satisfy the various requirements in bakery or confectionery manufacture.

## Claims

1. Device for conveying thin and relatively fragile sticks (1) non-uniform in length one after another, for trimming short those sticks too long and for eliminating those sticks too short so that sticks substantially uniform in length are conveyed to the next step, comprising an endless belt (2) or the like having therein a multiplicity of grooves (3) being capable of accomodating the sticks and formed as recesses perpendicular to the belt's advancing direction (12), a first guide (5) parallel to the belt (2) and having a first introducer (4), said sticks (1) being fed upstream of the introducer (4) with respect to the conveying direction (12), a limiter (6) and an opposed second guide (7) at a position opposite to the first guide (5), a deterrent plate (8) disposed near the topside and downstream end of said first guide (5), a horizontal air blow (9) provided near the downstream end of the first guide (5) and a pressing member (10; 17; 19, 20) downstream of said horizontal air blow (9) and at a position opposed thereto, such that there remain in the grooves (3) only sticks (1) shorter than the distance between a main plate (13) of the first guide (5) and the limiter (6) and longer than the distance between the opposed second guide (7) and the deterrent plate (8), when the device is used.

2. A device according to claim 1, comprising a second introducer (4') in contact with the limiter (6) and the second guide (7) and being upstream of the limiter (6) with respect to the conveying direction (12) (Fig. 1).

3. A device according to claim 1, comprising a second introducer (15) apart from the limiter (6) and a guide plate of the second guide (7) and upstream of the limiter (6) with respect to the conveying direction (12) (Fig. 5).

4. A device according to claim 1, wherein said pressing member is an air blow (10) blowing in the vertical direction to discharge too short sticks (Fig. 1).

5. A device according to claim 1, wherein said pressing member is a spatula.

6. A device according to claim 1, wherein said pressing member is a member (19) movably supported by a spring (20) (Fig. 6).

7. A device according to claim 1, wherein said pressing member is a brush (17) (Fig. 4).

8. A device according to claim 1, wherein said pressing member is a piece of sponge.

## Patentansprüche

1. Vorrichtung zum Transportieren dünner, verhältnismäßig zerbrechlicher und ungleich langer Stäbe (1) in Folge, um zu lange Stäbe zu kürzen und zu kurze Stäbe auszusondern, so daß im wesentlichen gleichlange Stäbe dem nächsten Prozeßschritt zugeführt werden, mit einem Endlosriemen (2) oder dergl., der eine Vielzahl von Nuten (3) zur Aufnahme der Stäbe enthält, die als zur Förderrichtung (12) des Riemens rechtwinklige Vertiefungen ausgebildet sind, mit einer ersten Führung (5), die parallel zum Riemen (2) verläuft und eine erste Einführeinrichtung (4) aufweist, wobei die Stäbe (1) bezüglich der Förderrichtung (12) oberhalb der Einführeinrichtung (4) zugeführt werden, mit einem Begrenzer (6) und einer gegenüberliegenden zweiten Führung (7) an einer der ersten Führung(5) gegenüberliegenden Stelle, einer Abweisplatte (8) nahe der Oberseite und unterhalb (laufabwärts) der ersten Führung (5), einem waagerechten Luftgebläse (9) nahe dem laufabwärtigen Ende der ersten Führung (5) sowie einem Andruckelement (10; 17; 19, 20) unterhalb des waagerechten Luftgebläses (9) an einer diesem gegenüberliegenden Stelle derart, daß in den Nuten (3) nur Stäbe (1) verbleiben, die bei arbeitender Vorrichtung kürzer als der Abstand zwischen einer Hauptplatte (13) der ersten Führung (5) und dem Begrenzer (6) und länger als der Abstand zwischen der gegenüberliegenden zweiten Führung (7) und der Abweisplatte (8) sind.

2. Vorrichtung nach Anspruch 1 mit einer zweiten Einführeinrichtung (4') in Kontakt mit dem Begrenzer (6) und der zweiten Führung (7), die - bezüglich der Förderrichtung (12) (Fig. 1) - oberhalb des Begrenzers (6) liegt (Fig. 1).

3. Vorrichtung nach Anspruch 1 mit einer vom Begrenzer (6) und einer Führungsplatte der zweiten Führung (7) getrennten zweiten Einführeinrichtung (15), die - bezüglich der Förderrichtung (12) (Fig. 5) - oberhalb des Begrenzers (6) liegt.

4. Vorrichtung nach Anspruch 1, bei der das Andruckelement ein Luftgebläse (10) ist, das in vertikaler Richtung bläst, um zu kurze Stäbe abzuwerfen (Fig. 1).

5. Vorrichtung nach Anspruch 1, bei der das Andruckelement spachtelförmig ist.

6. Vorrichtung nach Anspruch 1, bei der das Andruckelement ein mittels einer Feder (20) bewegbar gelagertes Element (19) ist (Fig. 6).

7. Vorrichtung nach Anspruch 1, bei der das Andruckelement eine Bürste (17) ist (Fig. 4).

8. Vorrichtung nach Anspruch 1, bei der das Andruckelement ein Stück Schwamm ist.

## Revendications

1. Appareil pour convoyer des bâtons minces et relativement fragiles (1) ayant une longueur non uniforme, l'un après l'autre, pour couper les bâtons trop longs et pour éliminer les bâtons trop courts, de telle sorte que des bâtons de longueur pratiquement uniforme soient convoyés vers l'étape suivante, comprenant une bande sans fin (2) ou analogue ayant en elle une pluralité de cavités (3) aptes à recevoir les bâtons et formées de creux perpendiculaires à la direction d'avancement (12) de la bande, un premier guide (5) parallèle à la bande (2) et ayant un premier introducteur (4), lesdits bâtons (1) étant déposés en amont de l'introducteur (4) par rapport à la direction d'avancement (12), un limiteur (6) et un second guide opposé (7) en une position opposée au premier guide (5), une plaque faisant obstacle (8) disposée près du côté supérieur et de l'extrémité aval dudit premier guide (5), une soufflerie d'air horizontale (9) installée près de l'extrémité aval du premier guide (5) et un organe de pressage (10; 17; 19; 20) en aval de ladite soufflerie d'air horizontale (9) et sur une position opposée à ceux-ci, de telle sorte qu'il ne reste dans les cavités (3) que des bâtons (1) plus courts que la distance entre une plaque principale (13) du premier guide (5) et le limiteur (6) et plus longs que la distance entre le second guide opposé (7) et la plaque faisant obstacle (8), lorsque le dispositif est utilisé.

2. Appareil selon la revendication 1, comprenant un second introducteur (4') en contact avec le limiteur (6) et le second guide (7) et qui est en amont du limiteur (6) par rapport à la direction de transport (12) (Fig. 1).

3. Appareil selon la revendication 1, comprenant un second introducteur (15) séparé du limiteur (6) et une plaque de guidage du second guide (7) et en amont du limiteur (6) par rapport à la direction de transport (12) (Fig. 5).

4. Appareil selon la revendication 1, dans lequel ledit organe de pressage est un soufflage d'air (10) soufflant dans la direction verticale pour évacuer les bâtons trop courts (Fig. 1).

5. Appareil selon la revendication 1, dans lequel ledit organe de pressage est une spatule.

6. Appareil selon la revendication 1, dans lequel ledit organe de pressage est un membre (19) supporté de façon mobile par un ressort (20) (Fig. 6).

7. Appareil selon la revendication 1, dans lequel ledit organe de pressage est une brosse (17) (Fig. 4).

8. Appareil selon la revendication 1, dans lequel ledit organe de pressage est un morceau d'éponge.
